# EUROPEAN PATENT APPLICATION

(11) **EP 4 471 394 A1**
(43) Date of publication of application: **04.12.2024**
(21) Application number: 23746635.4
(22) Date of filing: 10.01.2023
(51) Int. Cl.: G01L 1/20, B29C 45/84

(54) **SAFETY MAT, MOLD CLAMPING DEVICE, AND INJECTION MOLDING MACHINE**

(30) Priority: 27.01.2022 JP 2022011326
(71) Applicant: The Japan Steel Works, Ltd., Tokyo 141-0032 (JP)
(72) Inventor: HORIMOTO Yuya, Tokyo 141-0032 (JP); NIYAMA Takuya, Tokyo 141-0032 (JP); IWASHIGE Takasumi, Tokyo 141-0032 (JP)
(74) Representative: Simmons & Simmons LLP (Munich)
(86) International application number: PCT/JP2023/000338
(87) International publication number: WO 2023/145418

(57) **Abstract**

A safety mat (20) is configured from: a pressure-sensitive switch mat (23), the surface of which comprises a flexible sheet; a step board (25) which is disposed on the pressure-sensitive switch mat (23); and a plurality of load transferring members (28) which are disposed spaced from each other between the pressure-sensitive switch mat (23) and the step board (25). A load acting on the step board (25) is detected by the pressure-sensitive switch mat (23) via the plurality of load transferring members (28).

## Description

### TECHNICAL FIELD

The present invention relates to a safety mat configured to detect intrusion of a worker by the presence or absence of a load, a mold clamping device including the safety mat, and an injection molding machine including the safety mat.

### BACKGROUND ART

A pressure-sensitive switch mat that detects the presence or absence of a load, that is, a safety mat, is installed in a building where security is required to detect intrusion of a suspicious person, or is installed in an industrial machine to detect a worker entering the machine.

There are various types of pressure-sensitive switch mats, some of which are configured as follows. That is, the pressure-sensitive switch mat includes a bottom sheet provided on a bottom surface, a surface sheet made of a flexible elastic insulating material such as a rubber sheet, and a pressure-sensitive conductive sheet provided between the bottom sheet and the surface sheet. The pressure-sensitive conductive sheet is made of a rubber material that is an insulator, and conductive particles mixed into the rubber material. When the pressure-sensitive conductive sheet is compressed, the conductive particles therein come into contact with each other at a compressed portion, thereby establishing electrical conductivity. The surface sheet and the bottom sheet are each provided with an electrode film, and the electrode film is in contact with the pressure-sensitive conductive sheet. Accordingly, when a load acts on the surface sheet, a portion where the load is applied is deformed, the pressure-sensitive conductive sheet becomes conductive due to compression, and the electrode films on the surface sheet and bottom sheet become conductive. The presence or absence of a load can be detected by applying a voltage to the electrode films in advance.

Patent Literature 1 proposes a pressure-sensitive switch mat of a different type. The pressure-sensitive switch mat described in Patent Literature 1 includes a step board portion and a plurality of tubular portions formed on a back surface side of the step board portion, and is integrally formed from rubber. A fluid is sealed in the tubular portion, and the fluid is connected to a pressure sensor via a connecting pipe. When a load acts on a surface of the step board portion, a portion is elastically deformed and the tubular portion on the back surface side is compressed. This causes the pressure of the fluid to increase and the increase is detected by the pressure sensor.

### CITATION LIST

### PATENT LITERATURE

Patent Literature 1: JPH06-043043A

### SUMMARY OF INVENTION

### TECHNICAL PROBLEM

The pressure-sensitive switch mat is excellent in that it can reliably detect the presence or absence of a load no matter where the load acts. For example, if the pressure-sensitive switch mat is installed on a bed on which a fixed platen and a movable platen are provided in a mold clamping device, the intrusion of a worker can be detected reliably, so that safety can be ensured. However, there are also problems. When a load acts on a surface of the pressure-sensitive switch mat, the portion is deformed and the load is detected. In other words, at least the surface sheet is flexible and is made of rubber or the like. In this case, if a high temperature substance adheres to the surface sheet, a portion thereof will melt and be damaged. For example, in a case where the pressure-sensitive switch mat is provided on a bed of a mold clamping device, if molten resin falls and adheres to the mat, that portion will be damaged.

In view of the above problems, an object of the present disclosure is to provide a safety mat that will not be damaged even if a high temperature substance adheres thereto, and a mold clamping device and an injection molding machine provided with such a safety mat.

Other problems and novel features will become apparent from description of the present description and the accompanying drawings.

### SOLUTION TO PROBLEM

The present inventors have found that the above problem can be solved by configuring a safety mat as follows. That is, the present disclosure relates to a safety mat including: a pressure-sensitive switch mat whose surface is made of a flexible sheet; a step board disposed on the pressure-sensitive switch mat; and a plurality of load transferring members arranged at intervals between the pressure-sensitive switch mat and the step board. A load acting on the step board is detected by the pressure-sensitive switch mat via the plurality of load transferring members.

### ADVANTAGEOUS EFFECTS OF INVENTION

According to the present disclosure, it is possible to provide a safety mat in which the pressure-sensitive switch mat is protected by the step board so as to be prevented from being damaged even if a high temperature substance adheres thereto.

### BRIEF DESCRIPTION OF DRAWINGS

[FIG. 1] FIG. 1 is a front view showing an injection molding machine according to the present embodiment.
[FIG. 2] FIG. 2 is a perspective view showing a safety mat according to the present embodiment.
[FIG. 3A] FIG. 3A is a side sectional view showing a part of the safety mat according to the present embodiment.
[FIG. 3B] FIG. 3B is a side sectional view showing a part of the safety mat according to the present embodiment.
[FIG. 4A] FIG. 4A is a side sectional view showing a part of a safety mat according to a second embodiment.
[FIG. 4B] FIG. 4B is a side sectional view showing a part of a safety mat according to a third embodiment.

### DESCRIPTION OF EMBODIMENTS

Hereinafter, specific embodiments will be described in detail with reference to the drawings. The present disclosure is not limited to the following embodiments. In order to clarify the description, the following description and the drawings are simplified as appropriate. In the drawings, the same elements are denoted by the same reference numerals, and repeated description thereof is omitted as necessary. In addition, hatching may be omitted to avoid complicating the drawings.

A safety mat according to the present embodiment includes: a pressure-sensitive switch mat having a surface formed of a flexible sheet and configured to detect presence or absence of a load; a step board disposed on the pressure-sensitive switch mat; and a plurality of load transferring members arranged at intervals between the pressure-sensitive switch mat and the step board,
in which a load acting on the step board is detected by the pressure-sensitive switch mat via the plurality of load transferring members.

Further, a mold clamping device according to the present embodiment includes: a fixed platen fixed to a bed; and a movable platen slidably provided on the bed and driven in a direction toward and away from the fixed platen,
in which the safety mat is provided on the bed.

Further, an injection molding machine according to the present embodiment includes: an injection device configured to inject a resin; and a mold clamping device configured to clamp a mold,
in which the mold clamping device includes: a fixed platen fixed to a bed; and a movable platen slidably provided on the bed and driven in a direction toward and away from the fixed platen, and
in which the safety mat is provided on the bed.

The present embodiment will be described.

### <Injection Molding Machine>

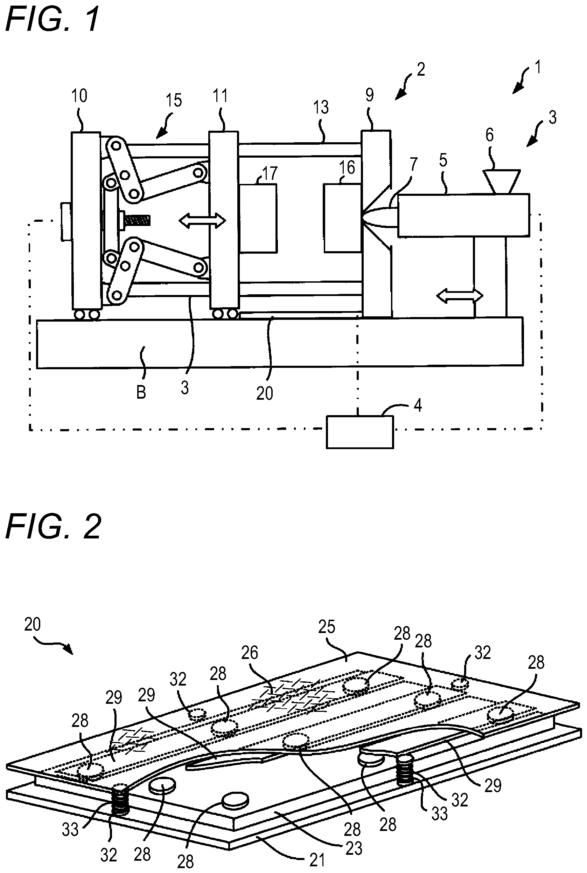

As shown in FIG. 1, an injection molding machine 1 according to the present embodiment is a horizontal injection molding machine 1. The injection molding machine 1 includes a mold clamping device 2 to be described below, an injection device 3, and a controller 4 configured to control the mold clamping device 2 and the injection device 3. The injection device 3 is shown in a simplified form in FIG. 1. The injection device 3 includes a heating cylinder 5 and a screw (not shown) provided in the heating cylinder 5. The heating cylinder 5 has a hopper 6 for supplying an injection material and an injection nozzle 7.

### <Mold Clamping Device>

The mold clamping device 2 according to the present embodiment includes a fixed platen 9 fixed on a bed B, a mold clamping housing 10 that slides on the bed B, and a movable platen 11 that also slides on the bed B. The fixed platen 9 and the mold clamping housing 10 are coupled by a plurality of, for example, four tie bars 13, 13, ... The movable platen 11 penetrates the tie bars 13, 13, ... and is slidable toward the fixed platen 9. A mold clamping mechanism 15 is provided between the mold clamping housing 10 and the movable platen 11. The fixed platen 9 and the movable platen 11 are respectively provided with molds 16 and 17. Accordingly, when the mold clamping mechanism 15 is driven, the molds 16 and 17 are opened and closed. The mold clamping mechanism 15 may be a hydraulically driven mold clamping cylinder, and the type is not limited. In the present embodiment, a toggle mechanism is adopted.

That is, the mold clamping device may include a mold clamping housing provided slidably on the bed, a plurality of tie bars coupling the fixed platen and the mold clamping housing, and the toggle mechanism provided between the mold clamping housing and the movable platen.

### <Safety Mat>

The mold clamping device 2 according to the present embodiment has a safety mat 20 according to the present embodiment which will be described in detail below. More specifically, the safety mat 20 is laid on the bed B and is provided between the fixed platen 9 and the movable platen 11. The safety mat 20 is connected to the controller 4. Although not shown in FIG. 1, the mold clamping device 2 is closed by a safety door, and safety is ensured by preventing workers from entering inside while the injection molding machine 1 is in operation. A worker may open the safety door and intrude into the mold clamping device 2 at the time of maintenance. When a worker intrudes, the safety mat 20 detects the intrusion and notifies the controller 4. The controller 4 is configured to prohibit driving of the mold clamping device 2 and the injection device 3.

FIG. 2 shows the safety mat 20 according to the present embodiment. The safety mat 20 includes a bottom board 21, a pressure-sensitive switch mat 23 provided on the bottom board 21, and a step board 25 disposed on the pressure-sensitive switch mat 23. The bottom board 21 may be made of any material, and in the present embodiment is made of a metal plate. The bottom board 21 is a member in contact with the bed B (see FIG. 1).

The pressure-sensitive switch mat 23 may be of various types available on the market. In the present embodiment, the pressure-sensitive switch mat 23 is of a type that includes a pressure-sensitive conductive sheet. Although not shown in FIG. 2, the pressure-sensitive switch mat 23 includes a bottom sheet, a pressure-sensitive conductive sheet provided on the bottom sheet, and a flexible surface sheet provided on the pressure-sensitive conductive sheet. The pressure-sensitive conductive sheet is formed of a rubber material which is an insulator. A large number of conductive particles are mixed in the rubber material. When the pressure-sensitive conductive sheet is compressed, the conductive particles therein come into contact with each other at a compressed portion, thereby establishing electrical conductivity. The surface sheet and the bottom sheet are each provided with an electrode film, and they are in contact with the pressure-sensitive conductive sheet. Accordingly, when a load acts on the surface sheet, a portion to which the load is applied is deformed, the pressure-sensitive conductive sheet is compressed, and electrical conductivity is established. Whatever type of pressure-sensitive switch mat 23 is employed, at least the surface sheet is made of a flexible material such as rubber.

The step board 25 is provided so as not to prevent high temperature substances from adhering to the surface sheet of the pressure-sensitive switch mat 23 and causing damage. The material of the step board 25 is not critical, but it is preferable to use a metal plate such as an aluminum plate, that is, an aluminum alloy plate, a stainless steel plate, or a steel plate. This is because the metal plate has high heat resistance and does not deteriorate even if a high temperature substance falls thereon. A surface of the step board 25 is subjected to an uneven processing 26 for sliding.

The step board is preferably made of an aluminum plate or a stainless steel plate or a steel plate.

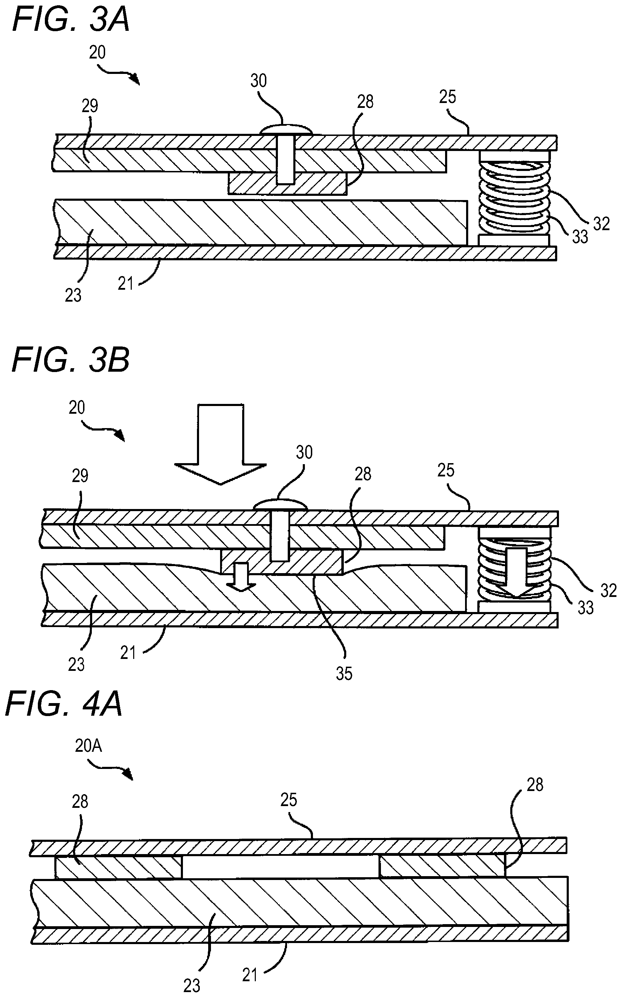

A plurality of load transferring members 28, 28, ... are provided on a back surface of the step board 25. The load transferring members 28, 28, ... may be made of any material. In the present embodiment, the members are formed in a plate shape from a rubber material, that is, an elastomer. The plurality of load transferring members 28, 28, ... are arranged at intervals and are attached to the back surface of the step board 25. The load acting on the step board 25 acts on the pressure-sensitive switch mat 23 via the small load transferring members 28, 28, ..., so that the load can be accurately detected. In the present embodiment, reinforcing ribs 29, 29, ... are attached to the back surface of the step board 25, and the load transferring members 28, 28, ... are fixed to the reinforcing ribs 29, 29, ... FIG. 3A shows a cross section of the safety mat 20, in which the load transferring member 28 is fixed to a lower surface of the reinforcing rib 29 by a screw 30.

In this way, it is preferable that the step board is provided with a plurality of reinforcing ribs, and the plurality of load transferring members are fixed to the reinforcing ribs.

In the safety mat 20 according to the present embodiment, the bottom board 21 and the step board 25 have a larger area than the pressure-sensitive switch mat 23. Accordingly, peripheral edges of the bottom board 21 and the step board 25 protrude outward beyond the pressure-sensitive switch mat 23. The bottom board 21 and the step board 25 are connected to each other by a plurality of elastic support members 32, 32, ... at the portions protruding outward. The elastic support member 32, 32, ... may be made of any material as long as it is capable of elastically supporting the step board 25. In the present embodiment, the member is made of a spring 33.

As described above, it is preferable that the safety mat includes: a bottom board having an area larger than that of the pressure-sensitive switch mat and disposed below the pressure-sensitive switch mat; and a plurality of elastic support members,
in which the plurality of elastic support members are provided on the bottom board while avoiding the pressure-sensitive switch mat, and support the step board, and
in which the elastic support members are configured to be compressed when a load is applied to the step board.

The elastic support member is preferably made of a spring.

### <Operation of Safety Mat>

Operation of the safety mat 20 according to the present embodiment will be described. The safety mat 20 according to the present embodiment is as shown in FIG. 3A when no load is applied to the step board 25. That is, the step board 25 is supported by the elastic support members 32, and the load transferring members 28 are separated from the pressure-sensitive switch mat 23. Accordingly, the pressure-sensitive switch mat 23 is not deformed, and no load is detected.

A worker stands on the safety mat 20. Then, as shown in FIG. 3B, a downward load acts on the step board 25. The elastic support member 32 is compressed by the load. When the elastic support member 32 is compressed, the load transferring member 28 comes into contact with the pressure-sensitive switch mat 23, and pushes the pressure-sensitive switch mat 23 downward. Then, as indicated by reference numeral 35, the pressure-sensitive switch mat 23 is deformed and the load is detected. When the pressure-sensitive switch mat 23 detects the load, the controller 4 (see FIG. 1) is notified. The controller 4 determines that a worker has intruded the mold clamping device 2.

In the safety mat 20 according to the present embodiment, the step board 25 is on a top surface. Accordingly, the pressure-sensitive switch mat 23 is less likely to be damaged. In the injection molding machine 1 (see FIG. 1) according to the present embodiment, if purging is performed with the injection nozzle 7 in contact with the mold 16, that is, if a so-called in-mold purging is performed, the high-temperature molten resin may fall onto the safety mat 20. Even if the molten resin falls onto the safety mat 20, the pressure-sensitive switch mat 23 is not damaged by being protected by the step board 25.

### <Second Embodiment>

The safety mat 20 according to the present embodiment can be modified in various ways. FIG. 4A shows a safety mat 20A according to a modified second embodiment. In the second embodiment, a reinforcing rib is not provided on the back surface of the step board 25. The plurality of load transferring members 28, 28, ... are directly fixed to the step board 25. The load transferring members 28, 28, ... are fixed to the step board 25 by an adhesive rather than by screws. Further, in the second embodiment, the elastic support member is not provided. The step board 25 is supported on the pressure-sensitive switch mat 23 by the plurality of load transferring members 28, 28, ... However, since the step board 25 is formed to be relatively light, the deformation of the pressure-sensitive switch mat 23 is small. Therefore, no load is detected in this state. When a worker stands on the step board 25, a deformation amount of the pressure-sensitive switch mat 23 increases, and the load is detected.

### <Third Embodiment>

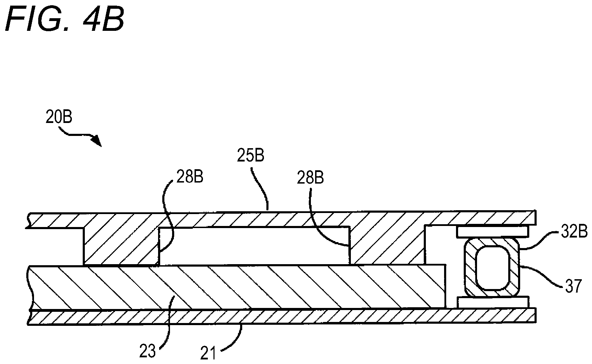

FIG. 4B shows a safety mat 20B according to a third embodiment. In the third embodiment, load transferring members 28B and 28B are integrally formed with a step board 25B. That is, the load transferring members 28, 28, ... are formed from the same material as the step board 25B. In the third embodiment, an elastic support member 32B is formed of a rubber tube 37. When no load is applied to the step board 25B, most of the weight of the step board 25B acts on the rubber tube 37. A part of the weight of the step board 25B acts on the pressure-sensitive switch mat 23 via the load transferring members 28B, 28B, ... However, most of the weight of the step board 25B is supported by the rubber tube 37, so that the load is not detected. When a worker stands on the step board 25, the rubber tube 37 is compressed, the pressure-sensitive switch mat 23 is deformed due to the load transferring members 28B, 28B, ..., and the load is detected.

### <Other Modifications>

The step board 25 have been described as preferably being made of metal. Alternatively, the step board may be made of a polyimide resin, a ceramic composite material, or a fiberglass composite material. These are materials used as heat insulating boards. Accordingly, even if a high temperature substance adheres to the step board 25, heat conduction to the surface sheet of the pressure-sensitive switch mat 23 can be prevented, and the surface sheet can be protected. It has been described above that the load transferring member 28 may be made of any material. Similar to the step board 25, the load transferring member 28 may be made of a polyimide resin, a ceramic composite material, or a fiberglass composite material. Alternatively, the load transferring member 28 may be made of metal. That is, the load transferring member may be made of rubber or metal.

Although the invention made by the present inventor has been specifically described above based on the embodiments, it is needless to say that the present invention is not limited to the embodiments described above, and various modifications can be made without departing from the scope of the invention. The plurality of examples described above may be appropriately combined.

### INDUSTRIAL APPLICABILITY

According to the present disclosure, it is possible to provide a safety mat that will not be damaged even if a high temperature substance adheres thereto, and a mold clamping device and an injection molding machine provided with such a safety mat.

Although the present invention has been described in detail with reference to specific embodiments, it will be apparent to those skilled in the art that various changes and modifications can be made without departing from the spirit and scope of the present invention.

The present application is based on Japanese Patent Application No. 2022-011326 filed on January 27, 2022, and the contents thereof are incorporated herein as reference.

### REFERENCE SIGNS LIST

| | | | |
|---|---|---|---|
| 1 | Injection molding machine | 2 | Mold clamping device |
| 3 | Injection device | 4 | Controller |
| 5 | Heating cylinder | 6 | Hopper |
| 7 | Injection nozzle | 9 | Fixed platen |
| 10 | Mold clamping housing | 11 | Movable platen |
| 13 | Tie bar | 15 | Mold clamping mechanism |
| 16 | Mold | 17 | Mold |
| 20, 20A, 20B | Safety mat | | |
| 21 | Bottom board | 23 | Pressure-sensitive switch mat |
| 25, 25B | Step board | 26 | Uneven processing |
| 28, 28B | Load transferring member | | |
| 29 | Reinforcing rib | 30 | Screw |
| 32, 32B | Elastic support member | 33 | Spring |
| 35 | Deformation | 37 | Rubber tube |
| B | Bed | | |

## Claims

1. A safety mat, comprising:
a pressure-sensitive switch mat having a surface formed of a flexible sheet and configured to detect presence or absence of a load;
a step board disposed on the pressure-sensitive switch mat; and
a plurality of load transferring members arranged at intervals between the pressure-sensitive switch mat and the step board,
wherein a load acting on the step board is detected by the pressure-sensitive switch mat via the plurality of load transferring members.

2. The safety mat according to claim 1, wherein the load transferring member is made of rubber or metal.

3. The safety mat according to claim 1 or 2, wherein the step board is made of an aluminum plate or a stainless steel plate or a steel plate.

4. The safety mat according to any one of claims 1 to 3, wherein the step board is provided with a plurality of reinforcing ribs, and the plurality of load transferring members are fixed to the reinforcing ribs.

5. The safety mat according to any one of claims 1 to 4, further comprising:
a bottom board having an area larger than that of the pressure-sensitive switch mat and disposed below the pressure-sensitive switch mat; and
a plurality of elastic support members,
wherein the plurality of elastic support members are provided on the bottom board while avoiding the pressure-sensitive switch mat, and support the step board, and
wherein the elastic support members are configured to be compressed when a load is applied to the step board.

6. The safety mat according to claim 5, wherein the elastic support member is a spring.

7. A mold clamping device comprising:
a fixed platen fixed to a bed; and
a movable platen slidably provided on the bed and driven in a direction toward and away from the fixed platen,
wherein the safety mat according to any one of claims 1 to 6 is provided on the bed.

8. The mold clamping device according to claim 7, further comprising:
a mold clamping housing slidably provided on the bed;
a plurality of tie bars coupling the fixed platen and the mold clamping housing; and
a toggle mechanism provided between the mold clamping housing and the movable platen.

9. An injection molding machine comprising:
an injection device configured to inject a resin; and
a mold clamping device configured to clamp a mold,
wherein the mold clamping device includes:
a fixed platen fixed to a bed; and
a movable platen slidably provided on the bed and driven in a direction toward and away from the fixed platen, and
wherein the safety mat according to any one of claims 1 to 6 is provided on the bed.
